Europäisches Patentamt

European Patent Office

Office européen des brevets

(11) Veröffentlichungsnummer: **0 417 443 A1**

## (12) EUROPÄISCHE PATENTANMELDUNG

(21) Anmeldenummer: **90114349.5**

(22) Anmeldetag: **26.07.90**

(51) Int. Cl.5: **B60T 8/42**

(30) Priorität: **15.09.89 DE 3930890**

(43) Veröffentlichungstag der Anmeldung:
**20.03.91 Patentblatt 91/12**

(84) Benannte Vertragsstaaten:
**AT DE FR GB IT**

(71) Anmelder: **ROBERT BOSCH GMBH**
**Postfach 10 60 50**
**W-7000 Stuttgart 10(DE)**

(72) Erfinder: **Siegel, Heinz**
**Hohenloherstrasse 86**
**W-7000 Stuttgart 40(DE)**
Erfinder: **Hellmann, Harald, Dipl.-Ing.**
**Nettelbeckstrasse 18**
**W-7140 Ludwigsburg(DE)**

(54) Vorrichtung zur Vermeidung des Blockierens der Räder eines Fahrzeugs.

(57) Die Bremsanlage (10) hat wenigstens eine zwischen einem Hauptbremszylinder (12) und wenigstens einer Radbremse (27) angeordnete Ventilanordnung (38) zum Steuern des Bremsdruckes während des Blockierschutzbetriebes. Außerdem ist eine Pumpe (35) zum Fördern von während einer Druckabbauphase aus der Radbremse (27) entnommenem Druckmittel zum Hauptbremszylinder (12) vorgesehen. Zwischen dem Hauptbremszylinder (12) und der Drucksteuerventilanordnung (38) ist eine Ventilanordnung (16) aus zwei parallel geschalteten 2/2-Wegeventilen (17, 18) vorgesehen. Während des Blockierschutzbetriebes ist das erste 2/2-Wegeventil (17) in seine den Durchfluß von Druckmittel von der Pumpe (35) zum Hauptbremszylinder (12) sowie von diesem zur Radbremse (27) drosselnden Stellung (b) schaltbar. Hierdurch werden Pulsationen am Bremspedal (11) des Hauptbremszylinders (12) weitgehend vermieden. Das vom Druck in der Hauptbremsleitung (14) in seine den Durchflußweg sperrenden Schaltstellung (b) schaltbare zweite 2/2-Wegeventil (18) ist bei Beendigung des Bremsvorganges in seine Schaltstellung (a) umschaltbar, in welcher sein Durchflußweg frei ist und einen schnellen Bremsdruckabbau ermöglichst. Das zweite 2/2-Wegeventil (18) ist ebenfalls in seine Schaltstellung (a) umschaltbar, wenn unzulässig hohe Pumpendrücke wirken.

FIG. 1

# VORRICHTUNG ZUR VERMEIDUNG DES BLOCKIERENS DER RÄDER EINES FAHRZEUGS

Stand der Technik

Die Erfindung geht aus von einer Vorrichtung zur Vermeidung des Blockierens der Räder eines mit einer Bremsanlage ausgestatteten Fahrzeugs.

Es ist schon eine solche Vorrichtung vorgeschlagen worden (DE-Patentanmeldung P 39 04 132.8), bei der die Ventilanordnung zwischen dem Hauptbremszylinder und der Pumpe aus einem 2/2-Wegeventil und einem Bypass-Ventil besteht. Dieses als Rückschlagventil ausgebildete Bypass-Ventil ist nur vom Hauptbremszylinder zur Pumpe bzw. zu den Radbremsen durchgängig. Wenn das 2/2-Wegeventil bei einem vom Fahrzeug ausgelösten Bremsvorgang vom Druck im Hauptbremszylinder in seine Schaltstellung umgesteuert ist, so werden beim Blockierschutzbetrieb der bekannten Vorrichtung vom Druckabbau in der Radbremse herrührende, am Bremspedal in nachteiliger Weise fühlbare Druckpulsationen aufgrund der drosselnden Wirkung des 2/2-Wegeventils weitgehend abgebaut. Wenn jedoch für den Druckaufbau in der Radbremse Druckmittel aus dem Hauptbremszylinder nachfließt, wo wird das drosselnde 2/2-Wegeventil über das Bypass-Ventil umgangen, was zu spürbaren, unerwünschten Impulsen am Bremspedal führt.

Vorteile der Erfindung

Die erfindungsgemäße Vorrichtung mit den kennzeichnenden Merkmalen des Hauptanspruchs hat demgegenüber den Vorteil, daß im Blockierschutzbetrieb beim Bremsdruckabbau mit Rückförderung von Druckmittel in den Hauptbremszylinder und beim Druckaufbau mit Nachförderung von Druckmittel aus dem Hauptbremszylinder Pulsationen am Bremspedal weitgehendst vermieden werden, weil die Drosselwirkung des 2/2-Wegeventils in beiden Fließrichtungen wirksam ist. Damit ist auch eine erhebliche Geräuschreduzierung bei der Förderung von Druckmittel gegeben. Dennoch ist ein schneller Druckabbau bei Beendigung des Bremsvorgangs während des Blockierschutzbetriebes möglich, da das federbetätigbare zweite 2/2-Wegeventil mit abfallendem Druck im Hauptbremszylinder in seine Nullstellung zurückschaltet.

Durch die in den Unteransprüchen aufgeführten Maßnahmen sind vorteilhafte Weiterbildungen und Verbesserungen der im Hauptanspruch angegebenen Vorrichtung möglich.

Die im Anspruch 2 gekennzeichnete Ausgestaltung der Vorrichtung ist insofern vorteilhaft, weil Beschädigungen oder Zerstörung der Ventile, der Leitungen und weiterer Teile der Vorrichtung sicher vermieden werden, wenn im Blockierschutzbetrieb ein überhöhter Pumpendruck, zum Beispiel bei verstopftem gedrosseltem Durchflußweg des ersten 2/2-Wegeventils, auftritt.

Mit der im Anspruch 3 offenbarten Maßnahme wird eine zweckmäßige Ausführungsform für das zweite, als Druckdifferenzventil wirkende 2/2-Wegeventil angegeben.

Die im Anspruch 4 aufgeführte Ausgestaltung hat den Vorteil, daß die Baugruppe in bestehende Vorrichtungen zur Vermeidung des Radblockierens, bei denen keine Maßnahmen zur Reduzierung der Pedalpulsationen während des Blockierschutzbetriebes getroffen sind, nachgerüstet werden kann. Die Baugruppe kann auf einfache Weise im Zuge der vom Hauptbremszylinder zu der Drucksteuerventilanordnung und der Pumpe führenden Bremsleitung angeordnet, zweckmäßigerweise an einem die Drucksteuerventilanordnung und die Pumpe aufnehmenden Aggregat angeflanscht werden.

Zeichnung

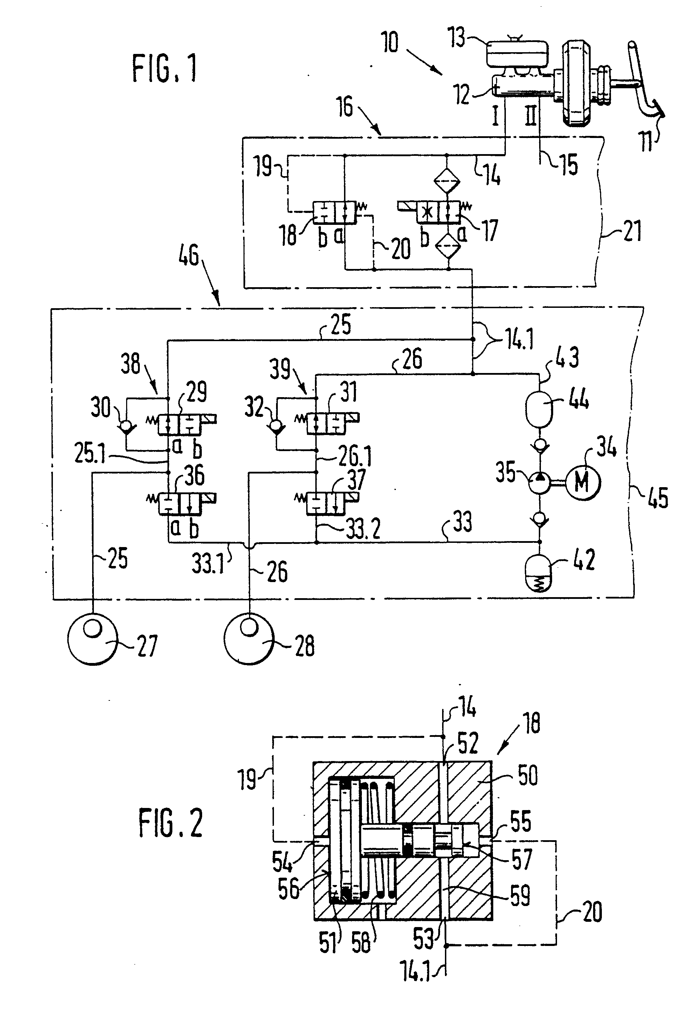

Ein Ausführungsbeispiel der Erfindung ist in der Zeichnung vereinfacht dargestellt und in der nachfolgenden Beschreibung näher erläutert. Es zeigen Figur 1 ein Schema einer teilweise wiedergegebenen Bremsanlage eines Fahrzeugs mit einer Vorrichtung zur Vermeidung des Blockierens der Fahrzeugräder und Figur 2 einen Schnitt eines in der Vorrichtung verwendeten Wegeventils.

Beschreibung des Ausführungsbeispiels

Die in Figur 1 der Zeichnung schematisch wiedergegebene Bremsanlage 10 hat einen mit einem Bremspedal 11 betätigbaren Hauptbremszylinder 12 mit einem Druckmittelvorratsbehälter 13. Vom Hauptbremszylinder 12 geht eine Hauptbremsleitung 14 eines Bremskreises 1 sowie eine Hauptbremsleitung 15 für einen Bremskreis II aus. Der Bremskreis I ist nachfolgend ausführlich beschrieben. In der Hauptbremsleitung 14 des Bremskreises I ist eine Ventilanordnung 16 aus zwei parallel geschalteten 2/2-Wegeventilen 17 und 18 angeordnet. Das erste 2/2-Wegeventil 17 weist in seiner federbetätigbaren Nullstellung a einen ungedrosselten Durchflußweg auf. In seiner elektromagnetisch erzeugbaren Schaltstellung b hat das erste 2/2-Wegeventil 17 einen gedrosselten Durchflußweg. Das zweite 2/2-Wegeventil 18 hat in seiner federbetätigbaren Nullstellung a ebenfalls einen ungedrosselten Durchflußweg, während es in seiner Schaltstellung b den Durchfluß von Druckmittel sperrt. Das zweite 2/2-Wegeventil 18 ist zur Erzeugung der Schaltstellung b in Abhängigkeit vom im Hauptbremszylinder 12 erzeugten Druck mit einer Steuerleitung 19 an die vom Hauptbremszylinder kommende Hauptbremsleitung 14 angeschlossen. Das zweite 2/2-Wegeventil 18 ist außerdem zur Rückführung in die Nullstellung a mit einer zweiten Steuerleitung 20 mit einem nach diesem Wegeventil liegenden Abschnitt 14.1 der Hauptbremsleitung 14 verbunden. Die beiden 2/2-Wegeventile 17 und 18 der Ventilanordnung 16 sind in einer Baugruppe 21 mit einem gemeinsamen Gehäuse zusammengefaßt. Die Ventile 17 und 18 können aber auch mit eigenen Gehäusen getrennt angeordnet sein.

Die Hauptbremsleitung 14 ist nach der Ventilanordnung 16 in zwei Radbremsleitungen 25 und 26 verzweigt, welche zu Radbremsen 27 und 28 des Fahrzeugs führen. In der Radbremsleitung 25 liegt ein Einlaßventil 29 in Form eines 2/2-Wegeventils mit einer federbetätigbaren Nullstellung a, in der das Ventil auf Durchlaß geschaltet ist. In einer elektromagnetisch erzeugbaren Schaltstellung b ist der Durchflußweg durch das Einlaßventil 29 gesperrt. Parallel zum Einlaßventil 29 ist ein Bypassventil 30 angeordnet. Ein identisch ausgebildetes Einlaßventil 31 mit Bypassventil 32 befindet sich in der Radbremsleitung 26. Von zwischen den Einlaßventilen 29 und 31 und den Radbremsen 27 und 28 liegenden Abschnitten 25.1 und 26.1 der Radbremsleitungen 25 und 26 gehen Leitungszweige 33.1 und 33.2 einer Saugleitung 33 aus, welche zu einer von einem elektrischen Antriebsmotor 34 antreibbaren Pumpe 35 für Druckmittel führt. Im Saugleitungsabschnitt 33.1 liegt ein als 2/2-Wegeventil ausgebildetes Auslaßventil 36 mit einer federbetätigbaren, den Durchf lußweg durch das Ventil sperrenden Nullstellung a. In der elektromagnetisch erzeugbaren Schaltstellung b des Auslaßventils 36 ist dagegen der Durchfluß weg offen. Ein identisch ausgebildetes Auslaßventil 37 befindet sich im Abschnitt 33.2 der Saugleitung 33. Das der Radbremse 27 zugeordnete Einlaßventil 29 und das Auslaßventil 36 bilden ebenso wie die der Radbremse 28 zugeordneten Ventile 31 und 37 jeweils eine Drucksteuerventilanordnung 38 und 39.

An die Saugleitung 33 ist nach den beiden Auslaßventilen 36 und 37 ein Druckmittelspeicher 42 angeschlossen. In einer von der Pumpe 35 ausgehenden und zum Abschnitt 14.1 der Hauptbremsleitung 14 führenden Druckleitung 43 befindet sich ein Dämpfer 44 zum Dämpfen von beim Pumpenbetrieb erzeugten Druckschwingungen im Druckmittel. Die beiden Drucksteuerventilanordnungen 38 und 39 sowie die Pumpe 35 mit dem Druckmittelspeicher 42 und dem Dämpfer 44 bilden ein Hydroaggregat 45, welches als Baugruppe ausgebildet ist. An das Hydroaggregat 45 ist die Baugruppe 21 vorzugsweise unmittelbar angeflanscht.

In entsprechender Weise ist der Bremskreis II mit den beschriebenen Elementen ausgestattet, um über weitere, nicht dargestellte Radbremsen das Fahrzeug zu verzögern.

Die Baugruppe 21 und das Hydroaggregat 45 bilden eine Vorrichtung 46 zur Vermeidung des Blockierens der Räder des Fahrzeugs. Die Funktionsweise dieser Vorrichtung 46 ist folgende:

Durch Betätigen des Bremspedals 11 wird im Hauptbremszylinder 12 Bremsdruck erzeugt, welcher durch Verschieben von Druckmittel durch die Hauptbremsleitungen 14 und 15 sowie die Radbremsleitungen 25 und 26 der beiden Bremskreise I und II in den entsprechenden Radbremsen 27 und 28 wirksam ist. Dabei befindet sich das erste 2/2-Wegeventil 17 in seiner Nullstellung a, während das zweite 2/2-Wegeventil 18 durch Druckbeaufschlagung über die Steuerleitung 19 seine Schaltstellung b einnimmt. Außerdem befinden sich die Einlaßventile 29 und 31 der Drucksteuerventilanordnungen 38 und 39 in ihren Nullstellungen a, ebenso wie die Auslaßventile 36 und 37.

Im Falle eines während der Bremsung drohenden Blockierens beispielsweise des der Radbremse 27 zugeordneten Fahrzeugrades schaltet ein nicht dargestelltes Steuergerät der Vorrichtung 46 das erste 2/2-Wegeventil 17, das Einlaßventil 29 und das Auslaßventil 36 in seine Schaltstellung b. Außerdem setzt das Steuergerät den Antriebsmotor 34 der Pumpe 35 in Gang. Hierdurch kann ein Bremsdruckabbau in der Radbremse 27 erfolgen, weil Druckmittel durch das Auslaßventil 36 aus der Radbremse 27 entnommen und durch die Saugleitung 33 in den Druckmittelspeicher 42 abgeleitet wird. Die Pumpe 35 saugt das Druckmittel aus dem Druckmittelspeicher 42 an und fördert dieses durch die Druckleitung 43 und die Hauptbremsleitung 14 zurück in den Hauptbremszylinder 12. Dabei muß das Druckmittel den gedrosselten Durchflußweg des in der Schaltstellung b befindlichen ersten 2/2-Wegeventils 17 nehmen. Durch die drosselnde Wirkung des ersten 2/2-Wegeventils 17 sind Druckstöße am Bremspedal 11 für den Fahrer nur in sehr geringem Maße fühlbar.

Im Anschluß an diesen, das Raddrehverhalten stabilisierenden Druckabbau schaltet das Steuergerät das Einlaßventil 29 und das Auslaßventil 36 in seine Nullstellung a, während das erste 2/2-Wegeventil 17 in seiner Schaltstellung b verbleibt. Aufgrund des vom Fahrer weiterhin belasteten Bremspedals 11 fließt Druckmittel durch die Hauptbremsleitung 14 und die Radbremsleitung 25 in die Radbremse 27, um dort erneut Bremsdruck aufzubauen. Auch während dieses Vorganges ist die drosselnde Wirkung des ersten 2/2-Wegeventils 17 gegeben. Diese im Blockierschutzbetrieb in rascher Aufeinanderfolge stattfindenden Phasen des Druckabbaus und Druckaufbaus sind daher für den Fahrer als stark verminderte Pulsation des Bremspedals 11 kaum spürbar.

Bei beendetem Blockierschutzbetrieb schaltet das Steuergerät das erste 2/2-Wegeventil 17 sowie das Einlaßventil 29 und das Auslaßventil 36 in die gezeichnete Nullstellung a. Bremsungen des Fahrers sind nun ungedrosselt an den Radbremsen 27 und 28 wirksam.

Mit der Beendigung eines Bremsvorganges wird das zweite 2/2-Wegeventil 18 aufgrund der sich hierbei einstellenden Druckdifferenz zwischen dem Bremsleitungsabschnitt 14.1 und der hauptbremszylinderseitigen Hauptbremsleitung 14 in seine Nullstellung a zurückgeschaltet. Das in den Radbremsen 27 und 28 befindliche Druckmittel kann daher unter Umgehung des ersten 2/2-Wegeventils 17 beschleunigt durch das zweite 2/2-Wegeventil 18 zurück zum Hauptbremszylinder 12 und in den Druckmittelvorratsbehälter 13 fließen. Das Umschalten des zweiten 2/2-Wegeventils 18 in seine Nullstellung a ist auch dann wirksam, wenn der Fahrer den Bremsvorgang während des Blockierschutzbetriebes abbricht oder das erste 2/2-Wegeventil 17 aufgrund einer Störung in seiner Schaltstellung b verharrt. Außerdem wirkt das zweite 2/2-Wegeventil 18 als Druckbegrenzungsventil. Im Falle der Förderung von Druckmittel durch die Pumpe 35 zum Hauptbremszylinder 12 wirkt nämlich bei zum Beispiel verstopftem Durchflußweg des ersten 2/2 -Wegeventils 17 ein unerwünscht hoher Druck auch auf das zweite 2/2-Wegeventil 18 und schaltet dieses über die Steuerleitung 20 in seine Nullstellung um. Der Pumpendruck kann sich nun über das zweite 2/2-Wegeventil 18 abbauen.

Ein Ausführungsbeispiel für das zweite 2/2-Wegeventil 18 ist in Figur 2 dargestellt. Das 2/2-Wegeventil 18 hat ein Gehäuse 50, in dem ein Stufenkolben 51 längsgeführt ist. Das Gehäuse 50 des 2/2-Wegeventils 18 hat einen Anschluß 52 für die vom Hauptbremszylinder 12 kommende Hauptbremsleitung 14. Ein zweiter Anschluß 53 ist für den zu den Radbremsen 27 und 28 führenden Abschnitt 14.1 der Hauptbremsleitung 14 vorgesehen. Außerdem hat das Gehäuse einen Anschluß 54 für die von der Hauptbremsleitung 14 kommende Steuerleitung 19 und einen Anschluß 55 für die Steuerleitung 20, welche zum Bremsleitungsabschnitt 14.1 führt. Der in der Steuerleitung 19 wirkende Druck belastet die größere Stirnfläche 56 des Stufenkolbens 51, während der Druck in der Steuerleitung 20 auf die kleinere Stirnfläche 57 des Stufenkolbens wirkt. Eine am Stufenkolben 51 angreifende Rückstellfeder 58 führt diesen in seine dargestellt Nullstellung a zurück, in welcher der Durchflußweg 59 durch das 2/2-Wegeventil 18 frei ist. In der Hauptbremsleitung 14 wirkender Bremsdruck ist in der Lage, den Stufenkolben in seine Schaltstellung b nach rechts zu bewegen, in der er den Durchflußweg 59 des 2/2-Wegeventils 18 unterbricht. Gegenüber dem Bremsdruck überhöhter Pumpendruck wirkt über die Steuerleitung 20 auf die kleinere Kolbenstirnfläche 57 und vermag den Stufenkolben 51, unterstützt durch die Rückstellfeder 59, in seine Nullstellung a zu bewegen.

## Ansprüche

1. Vorrichtung (46) zur Vermeidung des Blockierens der Räder eines mit einer Bremsanlage (10) ausgestatteten Fahrzeugs, mit einem wenigstens einkreisigen Hauptbremszylinder (12) mit einem Druckmittelvorratsbehälter (13), mit einer zwischen dem Hauptbremszylinder (12) und einer Radbremse (27) angeordneten Drucksteuerventilanordnung (38), mit einer Pumpe (35) zum Fördern von im Blockierschutzbetrieb einer Radbremse (27) entnommenen Druckmittel zum Hauptbremszylinder (12) sowie mit einer Ventilanordnung (16) in einer den Hauptbremszylinder (12) mit der Pumpe (35) und der Drucksteuerventilanordnung (38) verbindenden Bremsleitung (14) eines Bremskreises 1, wobei die Ventilanordnung (16) ein erstes 2/2-Wegeventil (17) aufweist, das in seiner federbetätigbaren Nullstellung (a) einen ungedrosselten Durchflußweg, in seiner Schaltstellung (b) jedoch einen gedrosselten Durchflußweg hat, dadurch gekennzeichnet, daß das erste 2/2-Wegeventil (17) bei Wirksamwerden der Blockierschutzfunktion in seine Schaltstellung (b) umsteuerbar ist, und daß die Ventilanordnung (16) ein parallel zum ersten 2/2-Wegeventil (17) geschaltetes zweites 2/2-Wegeventil (18) aufweist, welches in seiner federbetätigbaren Nullstellung (a) einen freien Durchflußweg hat, während es vom im Hauptbremszylinder (12) erzeugten Druck in seine den Durchfluß sperrende Schaltstellung (b) überführbar ist.

2. Vorrichtung nach Anspruch 1, dadurch gekennzeichnet, daß das zweite 2/2-Wegeventil (18) unter der Wirkung des von der Pumpe (35) erzeugten Druckes in seine Nullstellung (a) schaltbar ist.

3. Vorrichtung nach Anspruch 2, dadurch gekennzeichnet, daß das zweite 2/2-Wegeventil (18) einen Stufenkolben (51) hat, dessen größere Kolbenstirnfläche (56) vom Druck des Hauptbremszylinders (12) und dessen kleinere Kolbenstirnfläche (57) vom Druck der Pumpe (35) beaufschlagbar ist.

4. Vorrichtung nach Anspruch 1, dadurch gekennzeichnet, daß die beiden 2/2-Wegeventile (17, 18) der Ventilanordnung (16) in einer Baugruppe (21) zusammengefaßt sind.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0332399 (LUCAS)<br>* Spalte 3, Zeile 54 - Spalte 4, Zeile 13; Figur 1 *<br><br>----- | 1 | B60T8/42 |
| | | | **RECHERCHIERTE SACHGEBIETE (Int. Cl.5 )**<br><br>B60T |

Der vorliegende Recherchenbericht wurde für alle Patentansprüche erstellt

| Recherchenort | Abschlußdatum der Recherche | Prüfer |
|---|---|---|
| BERLIN | 10 DEZEMBER 1990 | BLURTON M.D. |